# FASCICULE DE BREVET EUROPEEN

(11) **EP 0 697 161 B1**
(45) Date de publication et mention de la délivrance du brevet: **23.09.1998**
(21) Numéro de dépôt: 94914444.8
(22) Date de dépôt: 26.04.1994
(51) Int. Cl.: H04N 15/00

(54) **DISPOSITIF ET SYSTEME VIDEO AUTOSTEREOSCOPIQUE**
AUTOSTERIOSKOPISCHES VIDEOSYSTEM UND VORRICHTUNG
AUTOSTEREOSCOPIC VIDEO DEVICE AND SYSTEM

(30) Priorité: 05.05.1993 FR 9305382
(43) Date de publication de la demande: 21.02.1996
(73) Titulaire: ALLIO, Pierre, F-75020 Paris (FR)
(72) Inventeur: ALLIO, Pierre, F-75020 Paris (FR)
(74) Mandataire: Jacquard, Philippe Jean-Luc
(86) Numéro de dépôt international: FR9400470
(87) Numéro de publication internationale: WO9426072

(56) Documents cités:
- US-A- 5 099 320
- FERNSEH UND KINO TECHNIK, vol.41, no.4, Avril 1987, BERLIN DE pages 145 - 149 R. BÖRNER '3D-Aufnahme- und Wiedergabeverfahren in Theorie und praktischer Anwendung'
- PATENT ABSTRACTS OF JAPAN vol. 17, no. 202 (E-1353) 20 Avril 1993 & JP,A,04 344 795 (HITACHI DENSHI LTD) 1 Décembre 1992

## Description

La présente invention a pour objet un dispositif de visualisation d'une image autostéréoscopique sur un écran vidéo devant lequel est disposé un réseau lenticulaire cylindrique.

Un procédé et un dispositif pour la production d'images autostéréoscopiques mettant en oeuvre des lentilles cylindriques ont été décrits dans la demande de brevet des Etats Unis n°US-A-5 099 320 déposée par la demanderesse.

La visualisation d'une image ainsi produite est en général réalisée à l'aide d'un téléviseur devant lequel est disposé un réseau lenticulaire dont le pas est égal au produit du pas des points images ou pixels et du nombre de points de vue de l'image autostéréoscopique. En d'autres termes, chaque lentille individuelle du réseau lenticulaire de visualisation englobe tous les points de couleur par pixel et quatre pixels par lentille pour quatre points de vue qui sont vus successivement et complémentairement par un observateur avec un certain grossissement inhérent au réseau lenticulaire mis en oeuvre, les points couleurs étant vus comme ayant la largeur de la lentille. L'observateur ne voit donc pas ensemble les trois composantes d'un pixel.

Il en résulte que, d'une part, les points images ou pixels sont grossis, et d'autre part, que le pas du réseau, qui est égal par exemple à la largeur de quatre pixels pour un système de visualisation à quatre points de vue, est visible.

La présente invention a pour objet un dispositif permettant d'éviter au moins en partie un autre des inconvénients précités.

Dans ce but, l'invention concerne un dispositif de visualisation d'une image autostéréoscopique sur un écran vidéo devant lequel est disposé un réseau lenticulaire cylindrique présentant des lentilles cylindriques dont les axes s'étendent parallèlement à une direction donnée caractérisé en ce que l'écran vidéo présente des pixels composés de p points de couleurs placés côte à côte perpendiculairement à ladite direction avec p entier supérieur à 1, en ce que le nombre de points de vue de l'image autostéréoscopique est différent de p x n, avec n entier non nul, et en ce que le réseau lenticulaire présente un pas égal au produit du pas des points de couleurs (ou phosphores )multiplié par le nombre de points de vue.

Par exemple, pour un nombre de points de vue égal à 4, le pas du réseau lenticulaire correspond à 4 points de couleurs.

Selon l'invention, le pas du réseau employé est dans ce cas trois fois plus petit que le pas des réseaux qui serait utilisé, selon l'art antérieur, et en outre, la mise en oeuvre de lentilles de pas plus faible, permet d'obtenir des distances focales plus petites ainsi que des surfaces observées plus faibles, ce qui évite à l'observateur de percevoir les structures ponctuelles des points de couleurs et des pixels de l'écran. De plus, pour l'observateur, le rapport de taille entre les points couleurs et les pixels (1/3) est préservé.

L'invention concerne également un procédé de traitement d'une image autostéréoscopique en vue de sa visualisation par un dispositif tel que défini ci-dessus, caractérisé en ce qu'il comporte une étape de permutation des points de couleurs des pixels de manière qu'un observateur voie les trois points de couleurs de chaque pixel de chaque point de vue dans trois lentilles successives du réseau lenticulaire.

Ladite permutation des points de couleurs peut être réalisée par permutation d'adresses de données numérisées des points de couleur lors de leur inscription ou de leur lecture dans une mémoire de points de couleur d'image.

Ladite permutation des adresses des points de couleur peut être avantageusement réalisée à l'aide d'au moins une mémoire de transcodage, pour au moins une ligne.

Selon un mode de réalisation préféré, la mémoire de transcodage est adressée en entrée par un compteur de pixels de chaque ligne remis à zéro au début de chaque ligne et produit en sortie, pour la mémoire des points couleur d'image, les adresses permutées correspondant aux permutations des points couleurs, respectivement, rouge, vert et bleu. La mémoire des points couleur d'image peut être également adressée en écriture par un compteur de lignes.

L'invention concerne également un système vidéo autostéréoscopique caractérisé en ce qu'il comporte :
- un dispositif de traitement d'image par permutation des points de couleur des pixels,
- un dispositif de visualisation tel que défini ci-dessus,
et en ce que ladite permutation est effectuée en décalant les p points de couleurs de chaque pixel de chaque point de vue d'un pas égal au pas du réseau lenticulaire de sorte qu'un observateur voie les p points de couleurs de chaque pixel de chaque point de vue dans p lentilles successives du réseau lenticulaire.

D'autres caractéristiques et avantages de l'invention apparaîtront mieux à la lecture de la description qui va suivre, en liaison avec les dessins qui représentent :
- la figure 1a, un dispositif de visualisation selon l'invention dans lequel ont été montrées, sous forme de tableaux, les permutations des points de couleurs des différents pixels dans le cas de quatre points de vue et de pixels RVB alignés,
- la figure 1b, le dispositif de la figure 1a avec des pixels disposés en carré et avec un pas de deux pixels,
- la figure 2, un dispositif de permutation d'adresses à mémoire de transcodage permettant la mise en oeuvre d'un procédé selon l'invention,
- la figure 3, des tableaux illustrant, dans la partie gauche, les permutations dans la mémoire de transcodage pixel pour les composantes rouge R, verte V, et bleue B d'une image autostéréoscopique, et à la partie droite, le résultat de l'écriture dans les mémoires de pixels dû à l'action de la mémoire de transcodage MTP.

Lorsqu'on observe un écran vidéo à la loupe, on constate que l'image couleur affichée est composée d'une succession périodique de points de couleurs Rouges (R), Verts (V) et Bleus (B), qui sont plus ou moins lumineux et que la sensation colorée résultante est due à l'effet de mélange de ces trois composantes élémentaires dans l'oeil de l'observateur.

Dans le cas de techniques d'affichage d'images en relief sans utilisation de lunettes, il est nécessaire de disposer un réseau lenticulaire convergent devant l'écran, et parallèlement à celui, à une distance égale à la longueur focale des microlentilles convexes d'axe vertical composant le réseau. De la sorte, les microlentilles du réseau grossissent les points horizontalement et elles renvoient à l'infini les informations visuelles présentes sur l'écran.

Lorsqu'un observateur se déplace parallèlement à l'écran, il voit successivement des points bleus, verts et rouges dans l'ordre inverse de celui établi par la structure de l'écran (en raison de l'inversion due à la présence des lentilles cylindriques). Dans l'art antérieur, le réseau présente un pas correspondant à un multiple entier du pas des pixels (en fait il est très légèrement inférieur à cette valeur) et, lorsque l'observateur est à la distance correcte d'observation correspondant à la teinte plate, il voit selon la place exacte de sa tête, une seule couleur pour tout l'écran et pour chacun de ses yeux. Par contre, s'il se rapproche ou s'il s'éloigne, des moirés de couleurs apparaissent d'autant plus que le pas du réseau virtuel, que l'on peut définir comme la projection du réseau réel sur la structure de l'écran à partir de l'oeil de l'observateur, est différent de celui de la structure de l'écran (trois points de couleurs par pixel et n pixels par lentilles, n étant égal au nombre de points de vue de l'image stéréoscopique).

Le résultat de ceci est que les informations couleurs détruisent totalement ou partiellement la lisibilité de l'image étant donné qu'il est impossible de grossir un pixel sans grossir en même temps ses composantes colorées.

L'idée de base de l'invention est qu'il est possible de remédier à ces inconvénients dans le cas où l'écran vidéo présente des pixels composés de points de couleurs placés horizontalement côte-à-côte.

L'invention s'applique au cas où le nombre de points de vue de l'image autostéréoscopique est différent de p ou d'un multiple de p.

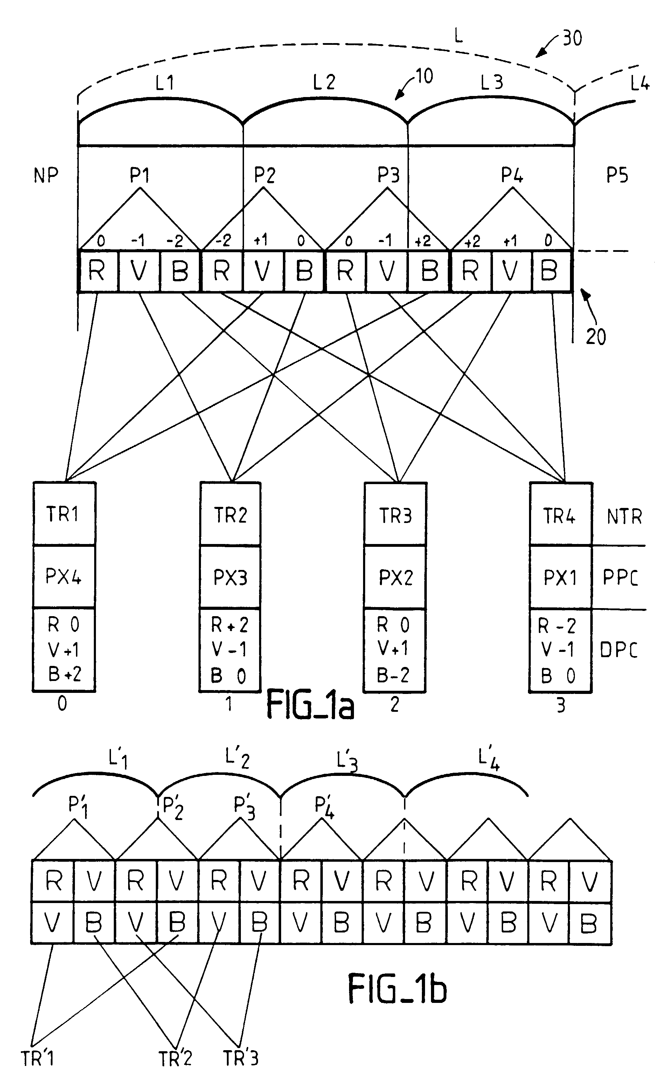

Selon l'invention, un réseau lenticulaire 10 présente un pas égal à celui d'un point couleur ou phosphore élémentaire multiplié par le nombre de points de vue. Dans l'exemple de réalisation de la figure 1, le nombre de points de vue est égal à 4. On a ainsi représenté quatre pixels P1 à P4 juxtaposés horizontalement, le pixel P1 correspondant, dans l'art antérieur, au premier point de vue, le pixel P2, au deuxième point de vue, le pixel P3, au troisième point de vue, et le pixel P4, au quatrième point de vue. Chacun de ces pixels de l'écran 20 présente trois composantes rouge, verte et bleue notées R, V et B respectivement. Le réseau lenticulaire 10 présente des microlentilles L1, L2, L3, etc... dont le pas est égal à la largeur prise horizontalement de quatre points couleurs juxtaposées, soit environ 4/3 de pixel. Aux pixels P1 à P4 précités correspondent ainsi trois microlentilles élémentaires L1, L2 et L3. Pour les pixels suivants P5 à P8 correspondant à la colonne adjacente, correspondent de la même façon trois lentilles L4, L5 et L6.

Un oeil d'un observateur qui observe l'écran 20 à travers le réseau lenticulaire 10 verra, suivant sa position, soit la juxtaposition de la composante rouge R du pixel P1, de la composante verte V du pixel P2 et la composante bleue B du pixel P3, soit la juxtaposition de la composante verte V du pixel P1, de la composante bleue B du pixel P2 et de la composante rouge R du pixel P4, soit la juxtaposition de la composante bleue B du pixel P1, de la composante rouge R du pixel P3, et de la composante verte V du pixel P4, soit enfin la juxtaposition de la composante rouge R du pixel P2, de la composante verte V du pixel P3 et de la composante bleue B du pixel P4. En d'autres termes, chaque oeil de l'observateur est susceptible de mélanger visuellement les composantes rouge, verte et bleue de différents pixels de l'image. Bien entendu l'exemple qui a été donné ci-dessus avec les lentilles L1, L2, L3 est également valable pour les lentilles L4 à L6 et les pixels P5 à P8, et ainsi de suite.

De cette façon, l'observateur perçoit toujours une succession de microlentilles de couleurs complémentaires réparties selon un pas sur tout l'écran, le pas apparent du pixel restant toujours égal à quatre pixels comme précédemment, dans l'art antérieur, ce qui ne change pas la vision stéréoscopique, mais désormais, il faut trois microlentilles pour l'obtenir, à la place d'une microlentille trois fois plus grande (réseau 30 de lentilles L en pointillés à la figure 1).

Ainsi qu'il a été montré ci-dessus, la conservation de l'information de l'image nécessite un changement de position des informations rouges, vertes et bleues des images en relief ainsi présentées puisqu'un pixel donné comporte maintenant des informations relatives à trois points de vue différents. Ceci est réalisé par permutation des composantes colorées de chaque point de vue les unes par rapport aux autres selon la règle suivante :
- dans le point de vue n°1 qui, dans l'art antérieur, se trouvait entièrement sur le premier pixel P1, la composante rouge R reste en place (0) alors que la composante verte V est décalée d'un pixel à droite (+1) et la composante bleue B de deux pixels vers la droite (+2) (triplet TR1).
- dans le point de vue n°2 qui, dans l'art antérieur, se trouvait entièrement sur le second pixel P2, la composante verte V est décalée d'un pixel vers la gauche (-1) alors que la composante bleue B reste à sa place (0) et que la composante rouge R est décalée de deux pixels vers la droite (+2) (triplet TR2).
- dans le point de vue n°3 qui, dans l'art antérieur, se trouvait entièrement sur le troisième pixel P3, la composante bleue B est décalée de deux pixels vers la gauche (-2) alors que la composante rouge R reste à sa place (0) et que la composante verte V est décalée d'un pixel vers la droite (+1) (triplet TR3).
- dans le point de vue n°4 qui, dans l'art antérieur, se trouvait entièrement sur le quatrième pixel P4, le triplet TR4 est obtenu en décalant la composante rouge R de deux pixels vers la gauche (-2), la composante verte V d'un pixel vers la gauche (-1), la composante bleu B restant en place (0).

Ceci est représenté dans les tableaux en encadré de la figure la dans lesquels les numéros NTR de pixels sur l'écran correspondent aux triplets précités TR1, TR2, TR3 et TR4 et dans lesquels le déplacement DPC a effectuer sur les composantes couleurs des pixels à afficher est représenté par les incréments précités, alors que la position PPC des pixels venant de la caméra est désignée par PX4 pour le triplet TR1, PX3 pour le triplet TR2, PX2 pour le triplet TR3 et PX1 pour le triplet TR4. Ceci correspond à l'inversion des images élémentaires (par groupe de pixels en nombre égal au nombre de points de vue, ici 4) qu'il faut effectuer à la reproduction à partir d'une image brute obtenue par une caméra à lentille cylindrique pour obtenir une image en ortho-stéréoscopie. Une telle inversion a été décrite par ailleurs dans le brevet des Etats-Unis US-5 099 320 précité.

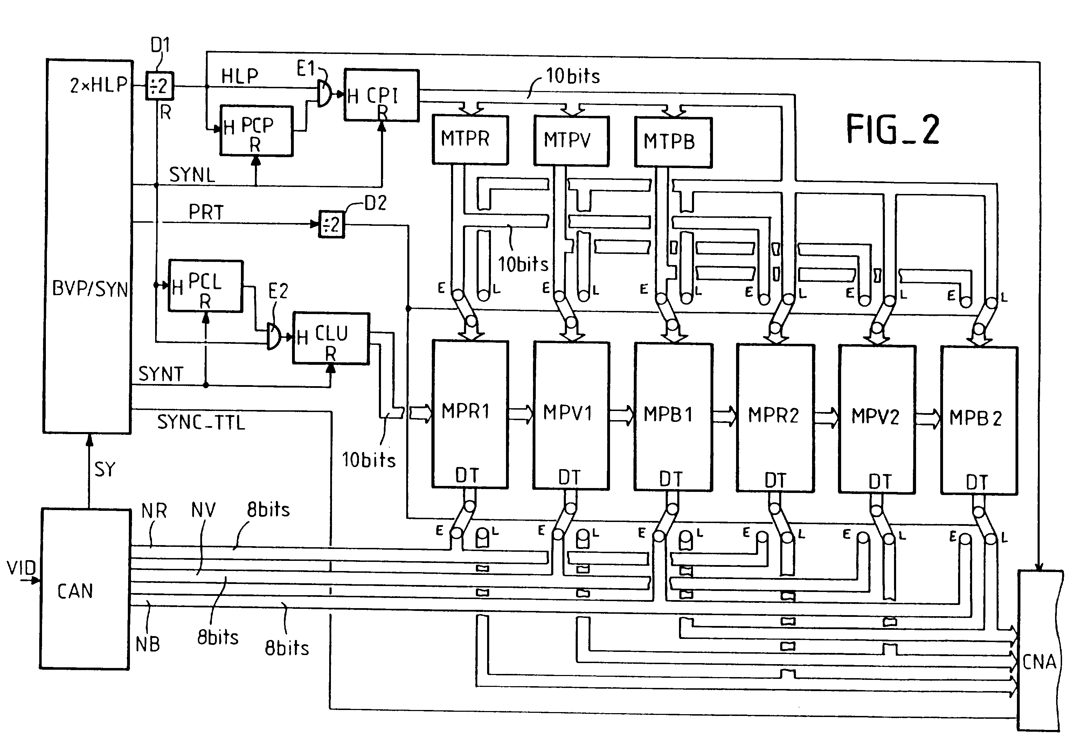

La figure 1b correspond au cas d'écrans à cristaux liquide General Electric ou THOMSON CSF (1024 x 1024). Les pixels sont répartis sur un carré, à savoir deux pixels rouge R et bleu B en diagonale et deux pixels verts V de demi-intensité sur l'autre diagonale. Le traitement à effectuer est similaire au précédent, mais avec un pas de deux pixels au lieu de trois, c'est-à-dire comme si on avait à faire à une image bichrome. Dans cet exemple, un nombre de points de vue doit être impair (ici 3) et chaque lentille L'1, L'2, L'3 etc, a une largeur couvrant 3 pixels. La permutation des pixels correspondant à ce cas est représentée à la figure 2b.

Selon la figure 2, un signal vidéo analogique VID est appliqué à l'entrée d'un convertisseur analogique-numérique, lequel génère de manière connue en soi un signal de synchronisation SY ainsi que des signaux numériques envoyés dans un bus 3x8 bits pour les composantes Rouge NR, Verte NV et Bleue NB. Le signal de synchronisation SY est introduit à l'entrée d'un circuit de verrouillage de phase et de synchronisation BVP/SYN, lequel produit en sortie d'une part, un signal d'horloge pixel 2HLP à cadence double de la cadence des pixels, un signal de synchronisation de ligne SYNL, un signal de parité de trame PRT, un signal de synchronisation de trame SYNT et un signal de synchronisation SYNC TTL.

Le signal d'horloge pixel 2HLP est appliqué à l'entrée d'un diviseur par deux D1 qui est remis à zéro en début de chaque ligne par le signal de synchronisation de ligne SYNL. Le signal de l'horloge pixel HLP produit à la sortie de D1 est introduit à l'entrée, d'une part d'un précompteur de pixels PCP, et d'autre part, à une entrée d'une porte ET E1 dont l'autre entrée est attaquée par la sortie du précompteur de pixels PCP. Le précompteur de pixels PCP est également remis à zéro au début de chaque ligne par le signal de synchronisation de ligne SYNL, qui remet également à zéro un compteur de pixels utiles CPI dont l'entrée est constituée par la sortie de la porte ET E1. La sortie du compteur de pixels utiles CPI est un bus à 10 bits qui attaque les entrées d'adresse de mémoires de pixels, à savoir une mémoire de pixels rouges MPR1, une mémoire de pixels verts MPV1, une mémoire de pixels bleus MPB1, ceci pour mémoriser une première image, et, une deuxième mémoire de pixels rouges MPR2, une deuxième mémoire de pixels verts MPV2 et une deuxième mémoire de pixels bleus MPB2 pour mémoriser la deuxième image. La sortie du circuit CPI attaque les entrées d'adresses de ces mémoires d'une part en écriture à travers des mémoires de transcodage MTPR pour les points couleur rouge, MTPV pour les points couleur verte et MTPB pour les points de couleur bleue, ou bien directement en lecture. On remarquera qu'il est également possible de réaliser ce transcodage lors de la lecture. A ce moment-là, les mémoires de transcodage MTPR, MTPV et MTPB sont disposées entre la sortie du circuit CPI et l'adressage en lecture des mémoires MPR1, MPV1, MPB1, MPR2, MPV2 et MPB2. Le signal de synchronisation de lignes attaque également l'entrée de comptage d'un précompteur lignes PCL ainsi qu'une entrée d'une porte ET E2 dont l'autre entrée est attaquée par la sortie du compteur PCL. La sortie de la porte ET E2 attaque l'entrée de comptage H d'un compteur de lignes utiles CLU. Les circuits PCL et CLU sont remis à zéro par le signal SYNT de synchronisation de trame. La sortie du circuit de comptage de lignes utiles CLU attaque, par l'intermédiaire d'un bus 10 bits les entrées d'adresses pour l'écriture et la lecture des mémoires MPR1, MPV1, MPB1, MPR2, MPV2, MPB2. Les bus 8 bits comprenant les signaux numériques de couleurs NR, NV et NB attaquent, en écriture, les entrées de données des mémoires respectives MPR1 et MPR2 pour le rouge (NR), MPV1 et MPV2 pour le vert (NV) et MPB1 et MPB2 pour le bleu (NB). La lecture des données des mémoires précitées est introduite aux entrées de données d'un convertisseur numérique-analogique synchronisé par le signal SYNC TTL. Les mémoires MPR1, MPV1, MPB1, MPR2, MPV2 et MPB2 sont séparées en deux parties, par exemple pour 1024 lignes, les 512 premières lignes correspondent à la première trame d'une image, les 512 dernières lignes, à la deuxième trame. Pendant qu'une image est écrite dans les mémoires MPR1, MPV1 et MPB1, elle est lue dans les mémoires MPR2, MPV2 et MPB2 et réciproquement. De la sorte, les opérations d'écriture et de lecture sont séparées. La commutation entre lecture et écriture est réalisée en réponse à un signal PRT de parité de trame divisé par deux par un diviseur D2.

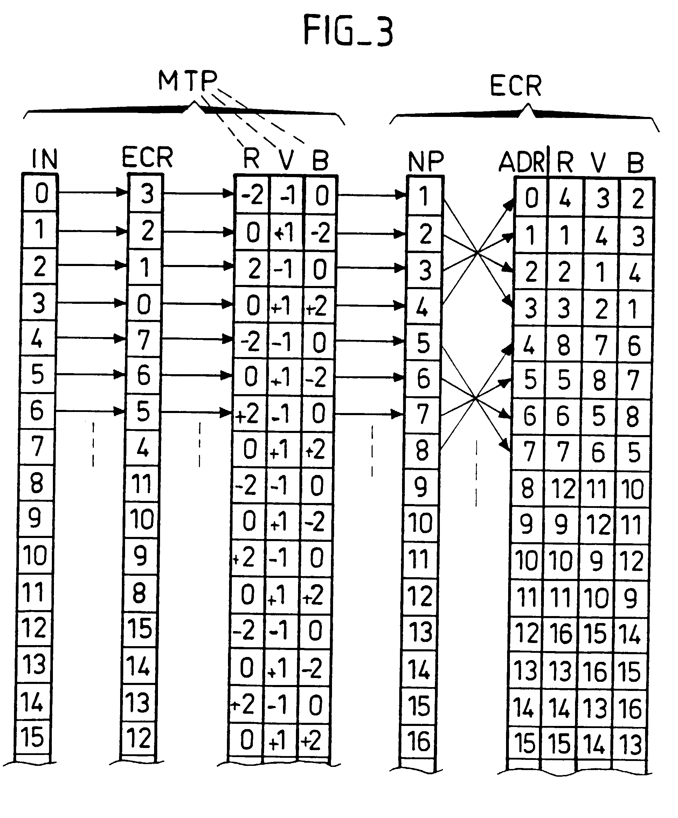

La figure 3 montre, dans la partie gauche, la table de permutation enregistrée dans les mémoires de transcodage pixels MTP (R, V, B). La première adresse en entrée, ou adresse 0 correspond en écriture à l'adresse 3, à savoir le triplet n°4 TR4. Comme le montre la figure 1, le décalage est de -2 pour le rouge, de -1 pour le vert et de 0 pour le bleu. Pour la deuxième adresse 1, ce qui correspond en écriture au triplet TR3, le décalage respectif est de 0 pour le rouge, +1 pour le vert et -2 pour le bleu. Pour la troisième adresse 2, correspond en écriture le triplet TR2 avec les décalages +2, -1 et 0, et pour la quatrième adresse n°3, correspond en écriture le triplet TR1 d'adresse 0 avec les décalages 0, +1 et +2. De la même façon, les adresses d'entrées suivantes 4, 5, 6 et 7 correspondent en écriture aux triplets TR8 d'adresse 7, TR7 d'adresse 6, TR6 d'adresse 5 et TR5 d'adresse 4. La table de conversion est la même que pour les adresses d'écriture respectivement 3, 2, 1, 0.

En ce qui concerne maintenant l'écriture dans les mémoires de pixels MTR, pour un numéro de pixel NP = 1, les données d'adresses en écriture sont à ADR = 0. Pour le triplet (TR4), l'adresse en écriture ADR est égale à 3 pour le bleu (P4), à 2 pour le vert (P3) et à 1 pour le rouge (P2). Pour le triplet suivant (TR3) l'adresse ADR est égale à 2 pour le rouge (P3), à 3 pour le vert (P4) et à 0 pour le bleu (P1). Pour le troisième triplet (TR2) correspondant au pixel PX3, la composante rouge est à inscrire en quatrième position (P4), le vert en première position (P1) et le bleu en deuxième position (P2). Enfin, pour le quatrième pixel PX4 correspondant au triplet TR1, le rouge vient en première position (P1), le vert en deuxième position (P2) et le bleu en troisième position (P3). Pour les pixels suivants de numéros NP de 5 à 8, le tableau se déduit du tableau précédent par ajout du chiffre 4 et ainsi de suite.

On remarquera qu'on a décrit ci-dessus un système de transcodage dans lequel l'image était transformée en numérique puis de nouveau en analogique. On remarque qu'un tel transcodage peut être fait en analogique, en particulier en l'intégrant dans un capteur CCD dans lequel est incorporé un circuit câblé de transcodage entre les sorties pixels des colonnes de points images, les entrées d'un registre à décalage afin de réaliser la permutation de couleurs souhaitée.

## Revendications

1. Dispositif de visualisation d'une image autostéréoscopique sur un écran vidéo devant lequel est disposé un réseau lenticulaire cylindrique présentant des lentilles cylindriques dont les axes s'étendent parallèlement à une direction, caractérisé en ce que l'écran vidéo présente des pixels composés de p points de couleurs placés côte à côte perpendiculairement à ladite direction, avec p entier supérieur à 1, en ce que le nombre de points de vue de l'image autostéréoscopique est différent de p x n, avec n entier non nul, et en ce que le réseau lenticulaire présente un pas égal au produit du pas des points de couleurs multiplié par le nombre de points de vue.

2. Dispositif selon la revendication 1, caractérisé en ce que p est égal à 3 et en ce que le nombre de points de vue est égal à 4, le pas du réseau lenticulaire correspondant à quatre points de couleur.

3. Procédé de traitement d'une image autostéréoscopique en vue de sa visualisation par un dispositif selon une des revendications 1 ou 2, caractérisé en ce qu'il comporte une étape de permutation des points de couleur des pixels de manière qu'un observateur voie les p points de couleur de chaque pixel de chaque point de vue dans p lentilles successives du réseau lenticulaire.

4. Procédé selon la revendication 3, caactérisé en ce que ladite permutation de points de couleur est réalisée par permutation d'adresses de données numérisées des points de couleur lors de leur inscription dans une mémoire de points de couleur d'image (MPR1, MPV1, MPB1, MPR2, MPV2, MPB2).

5. Procédé selon la revendication 3, caractérisé en ce que ladite permutation des points de couleur est réalisée par permutation d'adresses de données numérisées des points de couleur lors de leur lecture dans une mémoire de points de couleur d'image (MPR1, MPV1, MPB1, MPR2, MPV2, MPB2).

6. Procédé selon une des revendications 4 ou 5, caractérisé en ce que ladite permutation des adresses des points de couleur est réalisée par au moins une mémoire de transcodage (MTPR, MTPV, MTPB).

7. Procédé selon la revendication 6, caractérisé en ce que la mémoire de transcodage (MTPR, MTPV, MTPB) est adressée en entrée par un compteur de pixels (CPI) de chaque ligne, remis à zéro au début de chaque ligne et produit en sortie, pour la mémoire des points couleur d'image (MPR1, MPV1, MPB1), des adresses permutées correspondant aux permutations des points couleur respectivement rouge, vert, et bleu.

8. Procédé selon la revendication 7, caractérisé en ce que la mémoire des points couleur d'image est également adressée en écriture par un compteur de lignes (CLU).

9. Système vidéo autostéréoscopique caractérisé en ce qu'il comporte :
- un dispositif de traitement d'image par permutation des points de couleur des pixels,
- un dispositif de visualisation selon une des revendications 1 et 2
et en ce que ladite permutation est effectuée en décalant les p points de couleurs de chaque pixel de chaque point de vue d'un pas égal au pas du réseau lenticulaire de sorte qu'un observateur voie les p points de couleurs de chaque pixel de chaque point de vue dans p lentilles successives du réseau lenticulaire.

## Patentansprüche

1. Einrichtung zur Sichtbarmachung eines autostereoskopischen Bildes auf einem Videoschirm, vor den ein Zylinderlinsengitter gesetzt ist, das Zylinderlinsen aufweist, deren Achsen sich parallel zu einer Richtung erstrecken, dadurch gekennzeichnet, daß der Videoschirm Pixel aufweist, die aus p Farbpunkten zusammengesetzt sind, die Seite an Seite senkrecht zu der genannten Richtung angeordnet sind, wobei p eine ganze Zahl über 1 ist, daß die Zahl der Ansichtspunkte des autostereoskopischen Bildes von p x n verschieden ist, worin n eine von 0 verschiedene ganze Zahl ist, und daß das Linsengitter einen Teilungsschritt gleich dem Produkt des Teilungsschrittes der Farbpunkte multipliziert mit der Zahl der Ansichtspunkte aufweist.

2. Einrichtung nach Anspruch 1, dadurch gekennzeichnet, daß p gleich 3 ist und daß die Anzahl der Ansichtspunkte gleich 4 ist, wobei der Teilungsschritt des Linsengitters vier Farbpunkten entspricht.

3. Verfahren zur Verarbeitung eines autostereoskopischen Bildes bezüglich seiner Sichtbarmachung mittels einer Einrichtung nach einem der Ansprüche 1 oder 2, dadurch gekennzeichnet, daß es den Schritt der Permutation der Farbpunkte der Pixel derart enthält, daß ein Beobachter die p Farbpunkte jedes Pixels für jeden Ansichtspunkt in p aufeineinanderfolgenden Linsen des Linsengitters sieht.

4. Verfahren nach Anspruch 3, dadurch gekennzeichnet, daß die genannte Permutation der Farbpunkte durch Permutation der Adressen der jeweils entsprechend numerierten Farbpunkte bei ihrer Einschreibung in einen Farbpunktbildspeicher (MPR1, MPV1, MPB1, MPR2, MPV2, MPB2) verwirklicht wird.

5. Verfahren nach Anspruch 3, dadurch gekennzeichnet, daß die genannte Permutation der Farbpunkte durch Permutation der Adressen der entsprechend numerierten Farbpunkte beim Herauslesen aus einem Farbpunktbildspeicher (MPR1, MPV1, MPB1, MPR2, MPV2, MPB2) verwirklicht wird.

6. Verfahren nach einem der Ansprüche 4 oder 5, dadurch gekennzeichnet, daß die genannte Permutation der Adressen der Bildpunkte durch mindestens einen Umkodierungsspeicher (MTPR, MTPV, MTPB) vorgenommen wird.

7. Verfahren nach Anspruch 6, dadurch gekennzeichnet, daß der Umkodierungsspeicher (MTPR, MTPV, MTPB) eingangsseitig durch einen Pixelzähler (CPI) für jede Zeile adressiert wird, der zu Beginn jeder Zeile auf Null gestellt wird und am Ausgang für den Farbpunktbildspeicher (MPR1, MPV1, MPB1) Adressen erzeugt, welche entsprechend den Permutationen der jeweiligen Farbpunkte rot, grün und blau permutiert sind.

8. Verfahren nach Anspruch 7, dadurch gekennzeichnet, daß der Farbpunktbildspeicher in gleicher Weise beim Einschreiben durch einen Zeilenzähler (CLU) adressiert wird.

9. Autostereoskopisches Videosystem, dadurch gekennzeichnet, daß es folgendes enthält:
eine Einrichtung zur Verarbeitung eines Bildes durch Permutation der Farbpunkte der Pixel,
eine Einrichtung zur Sichtbarmachung gemäß einem der Ansprüche 1 und 2,
dadurch gekennzeichnet, daß die genannte Permutation vorgenommen wird, indem die p Farbpunkte jedes Pixels für jeden Ansichtspunkt um einen Teilungsschritt gleich einem Teilungsschritt des Linsengitters verschoben werden, derart, daß ein Betrachter die p Farbpunkte jedes Pixel für jeden Ansichtspunkt in p aufeinander folgenden Linsen des Linsengitters sieht.

## Claims

1. A device for displaying an autostereoscopic image on a video screen having a cylindrical lens array disposed in front of it, said cylindrical lens array comprising cylindrical lenses the axes of which extend parallel to one direction, characterized in that the video screen has pixels made up of p colour points placed side by side perpendicular to said direction where p is an integer greater than 1, in that the number of viewpoints for the autostereoscopic image is different from p x n, where n is an integer other than zero, and in that the lens array has a pitch equal to the product of the colour point pitch multiplied by the number of viewpoints.

2. A device according to claim 1, characterized in that p is equal to 3 and in that the number of viewpoints is equal to 4, the pitch of the lens array corresponding to four colour points.

3. A method of processing an autostereoscopic image for the purpose of displaying it by means of a device according to claim 1 or 2, characterized in that it includes a step of pixel colour point permutation such that an observer sees the p colour points of each pixel belonging to each viewpoint in p successive lenses of the lens array.

4. A method according to claim 3, characterized in that said colour point permutation is performed by permutation of addresses for digitized data of the colour points while they are being recorded in an image colour point memory (MPR1, MPG1, MPB1, MPR2, MPG2, MPB2).

5. A method according to claim 3, characterized in that said colour point permutation is performed by permutation of digitized data addresses for colour points while they are being read from an image colour point memory (MPR1, MPG1, MPB1, MPR2, MPG2, MPB2).

6. A method according to one of claims 4 and 5, characterized in that said permutation of colour point addresses is performed by at least one transcoding memory (MTPR, MTPG, MTPB).

7. A method according to claim 6, characterized in that the transcoding memory (MTPR, MTPG, MTPB) is input addressed by a pixel counter (CPI) for each line, which counter is reset to zero at the beginning of each line, and produces, on output, for the image colour point memory (MPR1, MPG1, MPB1), permutated addresses corresponding to the permutations of the red, green and blue colour points, respectively.

8. A method according to claim 7, characterized in that the image colour point memory is also write addressed by a line counter (CLU).

9. An autostereoscopic video system, characterized in that it comprises:
- a device for processing an image by permutation of pixel colour points; and
- a display device according to one of claims 1 and 2;
and in that said permutation is carried out by offsetting the p colour points of each pixel of each viewpoint by a pitch equal to the pitch of the lens array, such that an observer sees the p colour points of each pixel belonging to each viewpoint in p successive lenses of the lens array.
